# EUROPEAN PATENT SPECIFICATION

(11) **EP 0 471 215 B1**
(45) Date of publication and mention of the grant of the patent: **14.10.1998**
(21) Application number: 91112344.6
(22) Date of filing: 23.07.1991
(51) Int. Cl.: H02J 13/00, H05B 37/02

(54) **Remote control of an electrical device**
Fernsteuerung für ein elektrisches Gerät
Commande à distance pour un appareil éléctrique

(30) Priority: 13.08.1990 US 565689; 13.08.1990 US 565688; 13.08.1990 US 565711
(43) Date of publication of application: 19.02.1992
(73) Proprietor: ELECTRONIC BALLAST TECHNOLOGY INCORPORATED, Torrance, California 90505 (US)
(72) Inventor: Kang-Hu, Feng, Torrance, CA 90502 (US); Man Lau, Chung, Torrance, CA 90505 (US); Yang, Kevin, Torrance, CA 90501 (US); Si Zhu, Josuha, Torrance, CA 90501 (US); Shangder Shen, Peter, Rancho Palos Verdes, CA 90274 (US); Jednacz, Thomas C., Gastonia, NC 28054 (US)
(74) Representative: Dusseldorp, Jan Charles

(56) References cited:
- WO-A-88/04517
- WO-A-89/05086
- US-A- 3 833 886
- US-A- 4 388 563
- US-A- 4 388 567
- US-A- 4 523 128
- US-A- 4 717 863
- US-A- 4 866 350
- US-A- 4 889 999

## Description

The invention relates to a system for controlling the operational condition of a device located in a structure comprising:
- power terminals for connection to a source of AC power,
- encoder means coupled to said power terminals for generating a cyclical AC signal,
- decoder means for decoding said cyclical AC signal and generating a DC voltage the magnitude of which determines the operational condition of said device.

Such a system is known from US 3.833.886. The known system uses high frequency modulated signals. A disadvantage of such a system are the "broadcast" characteristics associated with such high frequency modulated signals.

The invention aims at providing a system not having the mentioned drawbacks.

A system as described in the opening paragraph is therefore characterized in that said encoder means comprises means for generating said cyclical AC signal out of a periodical AC voltage supplied by said source of AC power by lowering the amplitude of said periodical AC voltage during at least one half a period out of each n successive half periods of said periodical AC voltage, wherein n is an integer and said n successive half periods of said periodical AC voltage form one cycle of said cyclical AC signal, wherein said periodical AC voltage is of standard line frequency and wherein the normal building power line during operation of the system forms means for transmitting said cyclical AC signal to said device.

It was found that since the "broadcast" characteristics are eliminated in a system according to the invention, system cost and complexity could be reduced since additional wires and addressing circuitry are not required. This latter advantage makes the system very suitable for controlling dimming ballasts, gas discharge lamp sources, air conditioners and dampers.

Preferably the magnitude of said DC voltage is set by the time period between pulses with a lowered amplitude in successive cycles of said cyclical AC signal.

Said encoder means and said decoder means can be realized making use of a microcomputer.

The system according to the invention is very suitable for operating a fluorescent lamp. In that case the system preferably comprises a lamp ballast circuit equipped with
- first circuit means responsive to said DC voltage for generating a first AC signal having a magnitude proportional to the magnitude of said DC voltage and comprising means for coupling said first AC signal to said fluorescent lamp, and
- second circuit means responsive DC voltage for generating a second AC voltage signal having a magnitude proportional to the resonant frequency of said second circuit means and said second circuit means comprising means for coupling (Y,B,R) said second AC voltage signal to said filament means filaments of said fluorescent lamp. In such a system a decrease in the magnitude of said first AC voltage signal from a first level to a second level preferably causes said second circuit means to maintain the magnitude of said second AC voltage signal at a value at least equal to the value when said first AC signal was at said first level.

In such a system suitable for fluorescent lamp operation the decoder means can be remote from said encoder means. In a preferred embodiment of this system suitable for fluorescent lamp operation the time period between half periods having a low amplitude is adjustable at a number of discrete levels between 1 and n + 1, each discrete level corresponding to a selected light output from said fluorescent lamp. Preferably the magnitude of said first voltage signal enables said fluorescent lamp to operate at said selected light output.

### DESCRIPTION OF THE DRAWINGS

For a better understanding of the invention as well as other objects and further features thereof, reference is made to the following description which is to be read in conjunction with the accompanying drawings wherein:
Figure 1 is a block diagram of a system incorporating the present invention;
Figures 2(a) and 2(b) are waveforms to illustrate the missing pulse coding system of the present invention;
Figure 3 is a schematic diagram of the transmitter portion of a ballast system incorporating the present invention;
Figure 4 is a flow chart illustrating the operation of the encoding microprocessor;
Figure 5 is a schematic diagram of the dimming ballast portion of a ballast system incorporating the present invention; and
Figure 6 is a flow chart for the microprocessor utilized to decode the information transmitted from the wall switch box.

### DESCRIPTION OF THE INVENTION

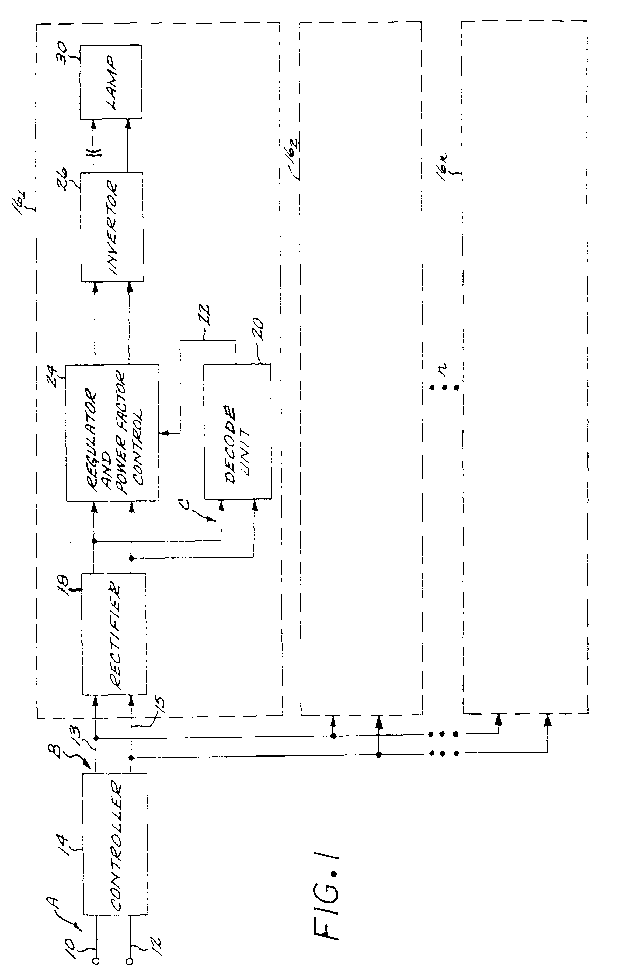

Referring now to Figure 1, a simplified block diagram of a dimming ballast control system incorporating the present invention is illustrated.

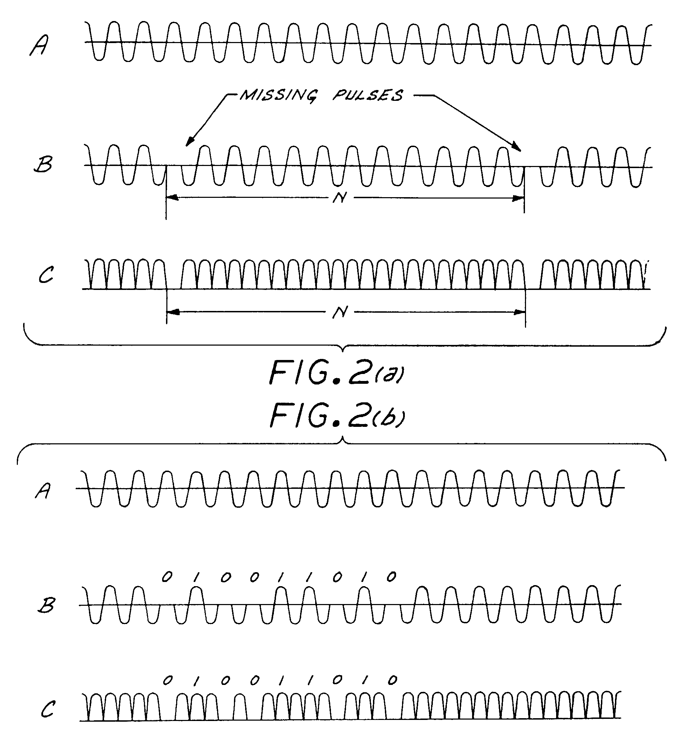

In particular, standard electrical power (standard line source, typically 120 volts AC, 60 hertz) is supplied over power lines 10 and 12 located in a building structure to a controller 14 (waveform A, Figure 2A) located in a wall switch unit. Controller 14, as set forth in more detail hereinafter, removes (or reduces the amplitude of) one pulse from the incoming alternating waveform in a predetermined time period N (waveform B, Figure 2A). The time between missing pulses corresponds to a desired lamp dimming (power) level. The output signal from control 14 is applied to a plurality of remote ballast units 16₁, 16₂...16ₙ. Each ballast unit is identical and thus only unit 16₁ will be described in detail. The ballast unit 16₁ comprises a rectifier 18 which provides a rectified DC voltage at its output (waveform C shown in Figure 2A), a decoder unit 20 coupled to the output of rectifier 18, decoder 20 providing a reference control signal on lead 22 to IC regulator and power factor control unit 24 as will be described in more detail hereinafter. Regulator unit 24, coupled to the output of rectifier 18, provides a regulated DC voltage output which is adjustable. The output signal from regulator unit 24 is coupled to invertor 26 which provides a high frequency AC signal, the frequency of the signal being dependent on the magnitude of the DC signal at the invertor input. The high frequency AC signal is coupled to ballast capacitor 28 and then to the fluorescent lamp being controlled. The dimming ballast systems are located remotely from the wall switch and typically adjacent the fluorescent lamps.

An alternate encoding arrangement is represented by the corresponding waveforms shown in Figure 2B wherein a sequence of missing pulses corresponds to a particular dimming level desired. The following description assumes that the encoding system shown in Figure 2A is being utilized.

As will explained in detail hereinafter, the output signal from the decoders determine the magnitude of the DC applied to invertor 26 and thus the AC voltage (current) applied to lamp 30. Invertor 26, in addition, controls the lamp filaments in a manner such that the filament voltage increases proportionately to the decrease (dimming) in voltage applied across the lamps.

In the system illustrated, the same dimming voltage is applied to each lamp responding to controller 14. Typically, a single wall switch in a room, for example, controls all the lamps in that room in an identical fashion.

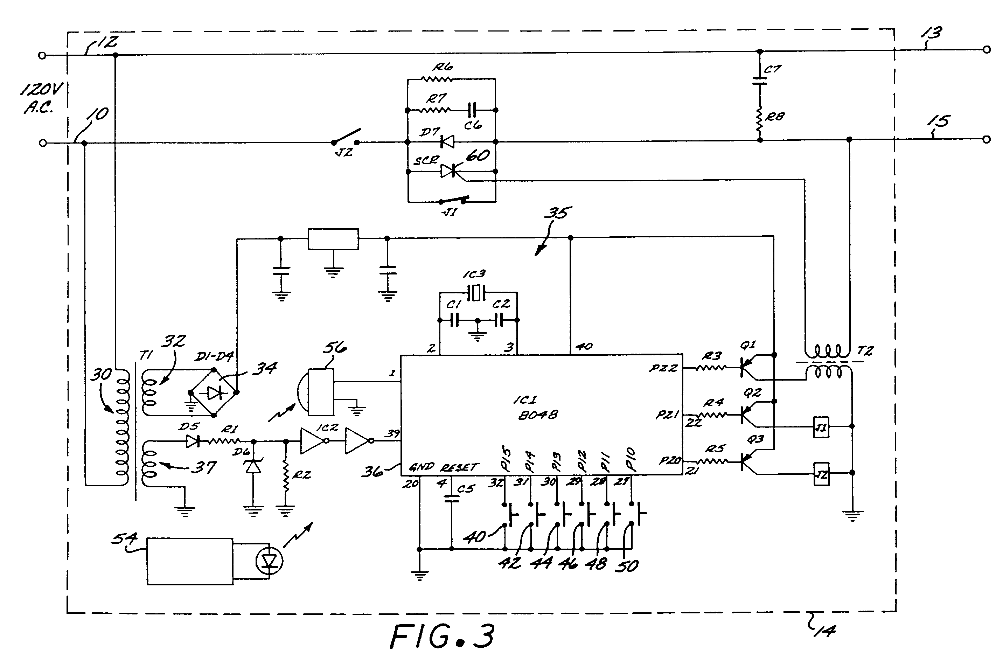

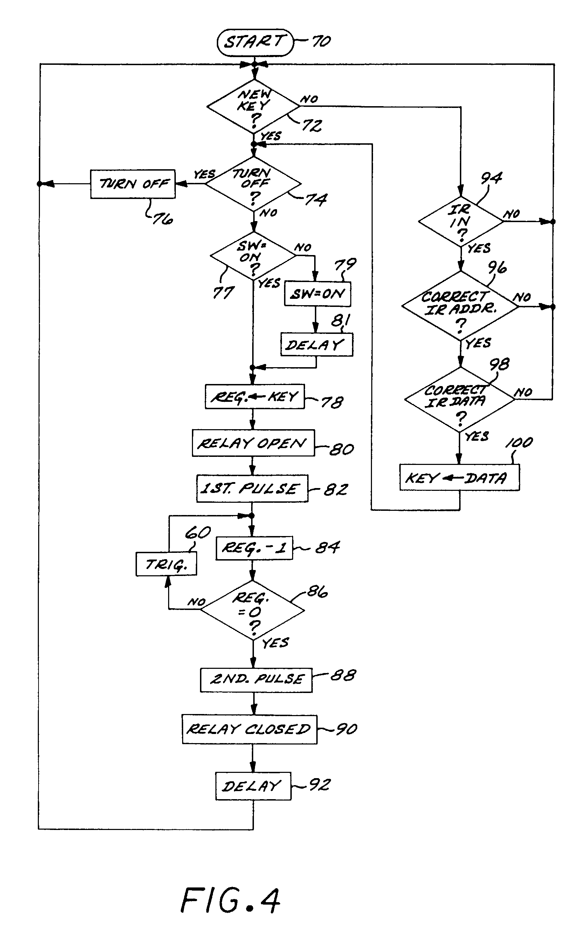

Figure 3 is a schematic diagram of controller 14. The voltage on lines 10 and 12 is applied to the primary winding 30 of transformer T1. An auxiliary winding 32 of transformer T1 is connected to a full wave rectifier 34, the output thereof being coupled to pin VCC of microcomputer 36 via power signal conditioner circuit 35. Auxiliary winding 37 power applies the AC line signal appearing at primary winding 30 to pin T1 of microprocessor 36 in the form of periodic input pulses. Preferably, microcomputer 36 is the Model 8048 manufactured by Intel Corporation, Santa Clara, California. Input pins P₁₀, P₁₁...P₁₅, are connected to ground via keys, or pushbuttons, 50, 48...40, respectively, as illustrated. Keys 40, 42...48, shown in the open or inoperative position, turn on fluorescent lamps when pressed to close the contacts and correspond to five different lamp power settings. The keys are located in the wall switch box. Key 50 corresponds to the off key and when closed causes microcomputer 36 to open J2 and turn off the lamps. As an optional device, a remote infrared controller 54 is used to control an infrared receiver 56, the coded output thereof being connected to pin To of microprocessor 36. As will be described with reference to the flowchart shown in Figure 4, activation of one of the pushbuttons 40, 42...48 generates a signal at pin P₂₂ which controls the magnitude of the voltage at the output of transistor Q1, and through transformer T2, the conducting state of thyristor, or silicon controlled rectifier, 60. Thyristor 60 determines the time period N between missing pulses of the coded signal (waveform C, Figure 2A) being transmitted to decoder unit 20.

Figure 4 illustrates the transmitter encoding flow chart. The flow chart is set forth to enable a computer programmer to program the Intel microcomputer described hereinabove in a manner such that the appropriate dimming coded signal is produced in response to a selected key. In particular, when the microcomputer 36 is activated (symbol 70), the microcomputer initially determines whether any one of the keys 40, 42...48 have been engaged (symbol 72). If one of the coding keys has been depressed, the microcomputer next determines whether the turn-off key has been activated (symbol 74). If yes, the system is turned off (symbol 76) and the microcomputer returned to the start position. If no turn-off signal is present, the microcomputer 36 checks to see if relay J2 is activated (transistor Q3 is turned on) (symbol 77). If not, Q3 is turned on and a delay (symbol 81) is imposed to enable the lamps to start at the highest level (intensity) before returning to its preset level. If the microcomputer determines that relay J2 is engaged (Q3 on), the microprocessor 36 next searches a particular address in a look-up table for the depressed key (symbol 78). It should be noted that relay J1 is used to minimize energy losses during the time periods when the remote control function is not being utilized. When the system is used, the J1 relay contact is in the open position. After the relay contact is in the open position (symbol 80), thyristor 60 is used to prevent the first pulse (waveform Figure 2A) in the AC signal to be transmitted to the ballast (symbol 82). As noted above, a register in microprocessor 36 has been set to a value corresponding to the particular key which has been depressed (in fact, the value in the register corresponds to the time period N). The register (symbol 84) is decremented each time a rectified pulse is detected at pin T₁ of microcomputer 36. If the register is not zero (symbol 86), the output at pin P₂₂ is such that transistor Q₁ causes thyristor 60 to allow the power to be transmitted to the ballast via lines 13 and 15. When the register is zero, the output at pin P₂₂ causes transistor Q₁ to bias thyristor 60 in a manner to prevent the second pulse to be transmitted during the period N (symbol 88). The relay is then deenergized (symbol 90), closing the relay contact. After a predetermined delay (symbol 92) to allow for mechanical "debouncing" of the keys, the cycle repeats itself (microprocessor 36 scans pins P₁₀, P₁₁... P₁₅ continuously to ascertain whether the setting for the lamp intensity has changed).

As noted previously, the ballast system of the present invention is arranged to have a remote infrared control option whereby a user can adjust the lamp dimming without depressing a key on the wall switch box. In this case, if the microprocessor 36 determines a key has not been depressed (symbol 72), a determination is made if a signal is at pin To (symbol 94). If not, the cycle is restarted. If there is a signal present, a check is made to see if the signal (most remote infrared signaling devices have a preset address data) has a correct address (symbol 96). If not the cycle is restarted. If the address is correct, a check is made to see if the preset signal data (a portion of the entire data) is correct (symbol 98). If not, the cycle restarts. If the data is correct, the remaining portion of the data, coded to correspond to one of the keys 40, 42...48 when depressed, causes the cycle (symbol 100) to start at the input point to symbol 74 as illustrated.

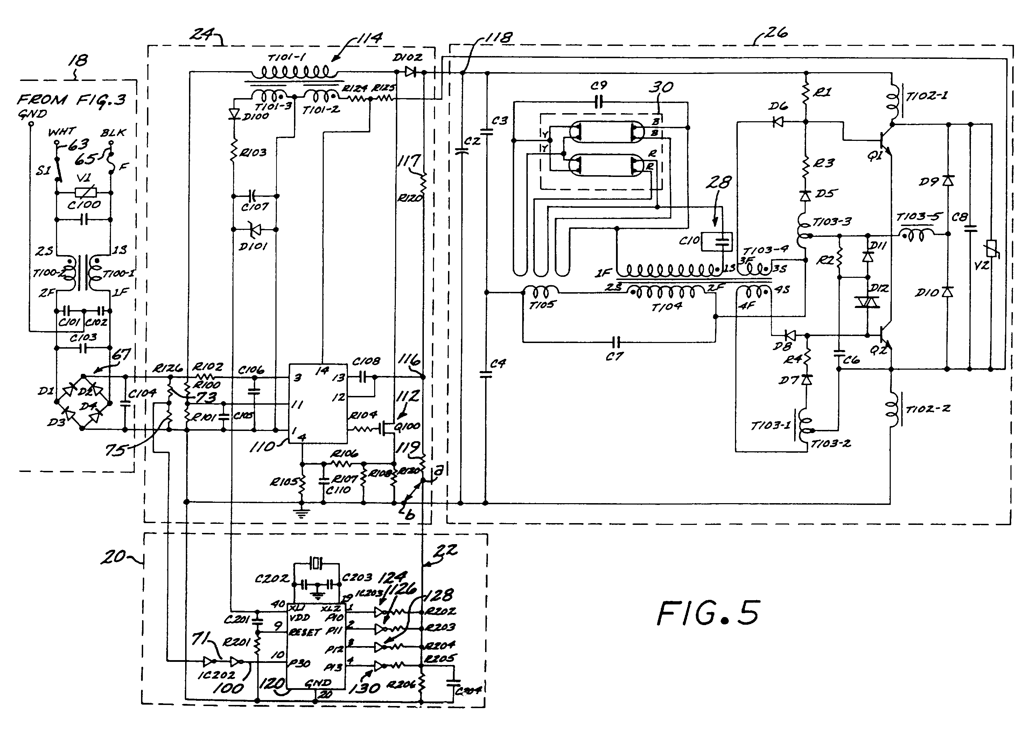

Referring now to Figure 5, a schematic diagram of the ballast system P₂₃ is illustrated.

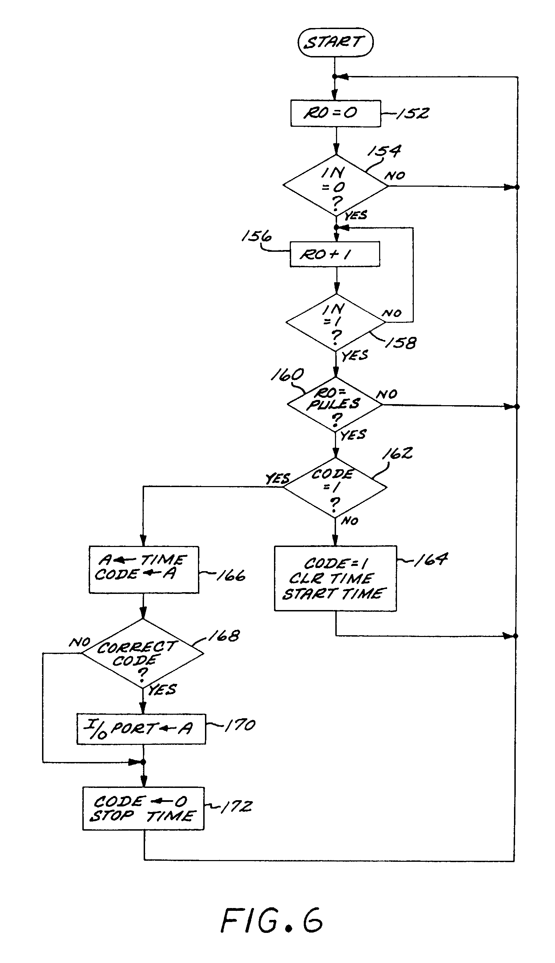

The coded signal (waveform B, Figure 2A) on the power output lines 13 and 15 (Figure 3) is coupled to the input power lines 63 and 65, respectively, as illustrated. The coded signal is applied to rectifier circuit 18 comprising diode full wave bridge circuit 67 and to regulator unit 24. The signal output from bridge circuit 67 is coupled to Schmitt trigger circuit 71 via a voltage divider circuit comprising resistors 73 and 75, trigger circuit 71 converting the missing rectified AC pulse waveform to a corresponding shaped pulse waveform which is applied to input pin 30 of microprocessor 120. The output of the bridge circuit 67 is also applied to one input of integrated circuit 110. As explained hereinafter, the output of circuit 110, preferably a commercially available Siemens TDA 4814A chip, switches MOSFET 112 from a conducting to a non-conducting state and vice versa at a frequency rate dependent upon the magnitude of the input voltage, the DC bus voltage, the inductance value of the inductor choke (114) and the desired input current. This in turn causes energy to be transferred from inductor choke 114 to output junction 118 (and across capacitor C2). Integrated circuit 110 also senses the input voltage waveform at pin 11 and forces the input current to resemble the voltage. As a result, the input current and input voltage will be substantially in phase and the power factor (cosine of the phase angle between the waveforms) will be close to one, typically 0.995. Thus, the harmonic content of the input current will be greatly minimized. As noted above, microcomputer 120, preferably an Intel 8051, functions to decode the input coded signal and effectively generate a resistance value at node 116 (input to pin 12 of chip 110) corresponding to the appropriate key depressed in the wall switch unit (it should be noted that the ballast system of the present invention can also be utilized without remote control i.e. if a variable resistance is applied directly across the taps a and b illustrated). In particular, and as explained with reference to the flow chart shown in Figure 6, microcomputer 120 continuously scans input pin P₃₀ and determines the length of time between missing pulses. According to this information, selected ones of the open drain inverters 124, 126...130 connected to pins P₁₀, P₁₁...P₁₃, respectively, are biased into the non-conducting state, thus connecting the resistances associated therewith into a voltage dividing circuit with resistances R120. The value of the resistance applied to pin 12 determines the DC bus voltage at junction 118. Changing the DC bus voltage at junction 118 determines the energy transfer (pulse) rate of the signal from inductor (choke) 114 applied across capacitor C2. It should be noted that chip 110 and the boost converter circuit are connected in a manner such that a total DC voltage at junction point 118 is greater than the peak input voltage (170 volts) applied to lines 63 and 65.

The output section of the ballast is basically a self-resonating halfbridge invertor which converts the DC power to high frequency AC (20-50 KHZ), the circuit comprising capacitors C3, C4, C6, C7 and C10, transistors Q1 and Q2, transformer T103 and diodes D5, D6, D7, and resistors R1, R2, R3 and R4. In this invertor circuit, the output voltage waveform is close to sinusoidal. The frequency is mainly determined by capacitor C7, the inductance of the primary winding of transformer T103, capacitor C10 and load (lamp) impedance. To control the filament voltage applied to fluorescent lamps L1 and L2 (although only two lamps are illustrated, the concept of the present invention can be utilized with one or more than two fluorescent lamps), a transformer T104 which is a ferrite core is utilized. Increasing filament voltage during dimming is accomplished by saturable transformer T104 which is connected in series with the secondary winding of T103 and capacitor C7, a resonant tank with reasonably higher impedance than the input impedance of T104. The filament voltage is determined by the number of turns wound on the ferrite core and the frequency of the resonating circuit. Transformer 104 is designed to operate at deep saturation when maximum voltage appears across C2. As the output voltage across C2 is reduced, for example, by the control of microcomputer 120, the frequency of the resonating circuit will increase as the impedance of the fluorescent lamps increase. Thus, the filament of the lamps will increase accordingly, both stabilizing the lamp light output when dimmed down and increasing lamp life.

The operating points of the fluorescent lamps in the preferred embodiment are set substantially as follows:

| Light Output | | Lamp Voltage | Resonant Frequency | Filament Voltage |
|---|---|---|---|---|
| % | Watts | (Volts) | (KHz) | (Volts) |
| 100% | 230 | 420 | 20.04 | 3.54 |
| 75% | 172 | 336 | 20.62 | 3.72 |
| 50% | 115 | 267 | 22.10 | 3.94 |
| 25% | 57.5 | 237.5 | 24.57 | 4.095 |
| 10% | 23 | 220 | 25.55 | 4.072 |

The details of the circuit operation are as follows. The voltage output from the secondary winding of T104 is applied across lamps L1 and L2. The inductor (choke) T102 limits current flow in the circuit, thus enabling a sinusoidal waveform to be generated. The voltage across windings T103 and T104 also have a sinusoidal waveshape, winding T104 being coupled to the lamp filament windings, the secondary winding of T103 being coupled across the lamp to initiate the arc. Windings T103 and T104 and a capacitor C7 form the circuit resonant tank. Winding T104 is designed to make the core saturate, the secondary voltage from T104 being substantially constant because its flux density is set to the maximum. The nominal (highest level) DC bus voltage at junction point 118, for 100% light output, is set at 420 volts. When the DC voltage at junction point 118 is reduced, the voltage of the secondary winding of T103 is also reduced proportionately. Thus the current through C10 and the lamps L1 and L2 is also reduced. Since each lamp has a negative resistance, as current is reduced, the voltage increases and the lamp impedance increases. The effective capacitance of C10 reflected to the primary of T103 is reduced, the overall circuit reactance thus being lower and increasing the circuit resonant frequency. Since the core of T104 is in deep saturation, the voltage reduction does not change its status, the flux density remaining substantially constant. In this case, the voltage applied to the lamp filaments is essentially proportional to the resonant frequency. The above operation repeats itself as the dimming voltage decreases.

Resistances R100 and R101 sample the sinusoidal input voltage waveform to the circuit, or chip 110, to control the power correction factor. It is, as noted hereinabove, preferred to have the input current close to the input voltage (phase, shape). The input current is sensed as it flows through resistors R107 and R108. Resistors R105 and R106 are used to compensate for the voltage of the fluorescent lamps being used. Capacitor C108, resistor R120 and the effective variable resistance at node point 116 functions both to filter out 120 Hz ripple and as a voltage control loop, i.e. to stabilize and regulate the DC voltage at node point 118. Figure 6 illustrates the receiver decoding flow chart. The flow chart is set forth to enable a computer programmer to program the Intel No. 8051 microcomputer described hereinabove in a manner such that the D.C. voltage corresponding to the desired lamp output dimming is provided to the circuitry controlling lamp operation.

At the start of the operation of microcomputer 120 (Figure 5), register R₀ is set to zero (symbol 152) and the input to microcomputer 120 from the Schmitt triggers is tested (checked) continuously (symbol 154). The input testing is done on a continual basis. If the initial input test indicates that an input pulse is not present, the R₀ register is incremented one unit (symbol 156). If the input test indicates a pulse is present, the process restarts. The input is tested again (symbol 158) and if no input pulse is present, the R₀ register is incremented one unit. If the input test indicates that a pulse is present, the count in the R₀ register is compared with the value in the PULSE register (symbol 160). The PULSE register has a value corresponding to the time period of a missing pulse. If the value in the R₀ register corresponds to the value in the PULSE register (corresponding to the first pulse after a period during which no pulse appeared) a third register (CODE) is tested to ascertain if it is set to 1 (symbol 162). If not, the CODE register is set to 1, the timer is first cleared and then started (symbol 164). If the CODE register previously has been set to 1, the value in the timer is transferred to an accumulator, the value in the accumulator corresponding to an address in a look-up table (symbol 166). The value in the look-up table corresponds to the key depressed in the wall switch box. If the value in the timer is not the preset value (symbol 168), the time value will not be decoded, the CODE register is cleared and the timer is stopped (symbol 172) and the process restarted. If the value in the timer is correct, a control code corresponding to the key depressed in the wall switch box can be obtained from the look-up table. The control code is sent to pins P₁₀ through P₁₅ to control the corresponding pin (symbol 170). In this case, the CODE register is cleared, the timer stopped and the process restarted.

The present invention thus permits an improved dimmable fluorescent lamp ballast system which encodes the power line signal in a building structure in accordance with a desired dimming state such that additional wires are not required in the structure, thereby reducing the cost of system installation. In addition, the lamp filament voltage is maintained substantially constant or increased slightly as the dimming voltage is decreased, thus both stabilizing lamp light output and prolonging lamp life.

The concept of providing a building structure control system for controlling the operating status of a remote device, as set forth in the present invention, without adding additional wires to the structure, can be utilized to control devices other than fluorescent lamp ballasts, such as other gas discharge lamp systems, air conditioners, and dampers.

## Claims

1. A system for controlling the operational condition of a device (24) located in a structure comprising:
- power terminals (10, 12) for connection to a source of AC power,
- encoder means (14) coupled to said power terminals for generating a cyclical AC signal,
- decoder means (120) for decoding said cyclical AC signal and generating a DC voltage the magnitude of which determines the operational condition of said device,
characterized in that said encoder means comprises means (14) for generating said cyclical AC signal out of a periodical AC voltage supplied by said source of AC power by lowering the amplitude of said periodical AC voltage during at least one half a period out of each n successive half periods of said periodical AC voltage, wherein n is an integer and said n successive half periods of said periodical AC voltage form one cycle of said cyclical AC signal, wherein said periodical AC voltage is of standard line frequency and wherein the normal building power line during operation of the system forms means for transmitting said cyclical AC signal to said device.

2. The system of claim 1, wherein the magnitude of said DC voltage is set by the time period between half periods with a lowered amplitude in successive cycles of said cyclical AC signal.

3. The system as defined in claim 2, wherein said encoding means comprises a microcomputer (36).

4. The system as defined in claim 3, wherein said decoder means comprises a microcomputer (120).

5. The system as claimed in claim 1 for controlling the operational condition of a fluorescent lamp (30) having filament means associated therewith, wherein the system further comprises a lamp ballast circuit equipped with
- first circuit means (26) responsive to said DC voltage for generating a first AC signal having a magnitude proportional to the magnitude of said DC voltage and comprising means for coupling said first AC signal to said fluorescent lamp, and
- second circuit means (26) responsive DC voltage for generating a second AC voltage signal having a magnitude proportional to the resonant frequency of said second circuit means and said second circuit means comprising means for coupling (Y,B,R) said second AC voltage signal to said filament means filaments of said fluorescent lamp,
a decrease in the magnitude of said first AC voltage signal from a first level to a second level causing said second circuit means to maintain the magnitude of said second AC voltage signal at a value at least equal to the value when said first AC signal was at said first level.

6. The system according to claim 5, wherein said decoder means is remote from said encoder means.

7. The system according to claim 5, wherein the time period between half periods having a low amplitude is adjustable at a number of discrete levels between and n+1.

8. The system according to claim 7, wherein each discrete level corresponds to a selected light output from said fluorescent lamp.

9. The system according to claim 8, wherein the magnitude of said first voltage signal enables said fluorescent lamp to operate at said selected light output.

10. The system as defined in claim 5, wherein said encoding means comprises a microcomputer (36).

11. The system as defined in claim 5, wherein said decoder means comprises a microcomputer (120).

12. The system as disclosed in any one of the previous claims, wherein said encoder means comprise means to interrupt said periodical AC voltage.

## Patentansprüche

1. System zur Steuerung des Betriebszustandes einer in einer Struktur liegenden Einrichtung (24), das folgendes umfaßt:
- Netzanschlüsse (10, 12) zum Anschluß an eine Quelle für Wechselstromleistung,
- mit den genannten Netzanschlüssen gekoppelte Codierungsmittel (14) zum Generieren eines zyklischen Wechselstromsignals,
- Decodierungsmittel (120) zum Decodieren des genannten zyklischen Wechselstromsignals und zum Erzeugen einer Gleichspannung, deren Größe den Betriebszustand dieser Einrichtung bestimmt,
dadurch gekennzeichnet, daß das genannte Codierungsmittel Mittel (14) umfaßt, um das genannte zyklische Wechselstromsignal aus einer von der genannten Quelle für Wechselstromleistung gelieferten periodischen Wechselspannung heraus durch Erniedrigen der Amplitude der genannten periodischen Wechselspannung während zumindest einer halben Periode von jeweils n aufeinanderfolgenden Halbperioden der genannten Wechselspannung zu generieren, wobei n eine ganze Zahl ist und die n aufeinanderfolgenden Halbperioden der genannten periodischen Wechselspannung einen einzigen Zyklus des genannten zyklischen Wechselstromsignals bilden, wobei die genannte periodische Wechselspannung Standardnetzfrequenz hat und die normale Gebäudesammelleitung beim Betrieb des Systems Mittel zum Übertragen des genannten zyklischen Wechselstromsignals zu der genannten Einrichtung bildet.

2. System nach Anspruch 1, wobei die Größe der genannten Wechselspannung durch die Zeitdauer zwischen Halbperioden mit einer erniedrigten Amplitude in aufeinanderfolgenden Zyklen des genannten zyklischen Wechselstromsignals eingestellt wird.

3. System nach Anspruch 2, wobei das genannte Codierungsmittel einen Mikrocomputer (36) umfaßt.

4. System nach Anspruch 3, wobei das genannte Decodierungsmittel einen Mikrocomputer (36) umfaßt.

5. System nach Anspruch 1 zur Steuerung des Betriebszustandes einer Leuchtstofflampe (30) mit zugehörigen Glühfadenmitteln, wobei das System weiterhin eine Lampenvorschaltgeräteschaltung umfaßt, die ausgerüstet ist mit
- auf die genannte Gleichspannung ansprechenden ersten Schaltungsmitteln (26) zum Generieren eines ersten Wechselstromsignals mit einer der Größe der genannten Gleichspannung proportionalen Größe und mit Mitteln zum Koppeln des genannten ersten Wechselstromsignals mit der genannten Leuchtstofflampe und
- auf die genannte Gleichspannung ansprechenden zweiten Schaltungsmitteln (26) zum Generieren eines zweiten Wechselspannungssignals mit einer der Resonanzfrequenz der genannten zweiten Schaltungsmitteln proportionalen Größe, wobei die genannten zweiten Schaltungsmittel Mittel zum Koppeln (Y, B, R) des genannten zweiten Wechselspannungssignals mit den genannten Glühfadenmitteln der genannten Leuchtstofflampe umfassen,
wobei eine Abnahme der Größe des genannten ersten Wechselspannungssignals von einem ersten Pegel auf einen zweiten Pegel bewirkt, daß die genannten zweiten Schaltungsmittel die Größe des zweiten Wechselspannungssignals auf einem Wert halten, der zumindest gleich dem Wert ist, bei dem das erste Wechselspannungssignal auf dem genannten ersten Pegel war.

6. System nach Anspruch 5, wobei das genannte Decodierungsmittel von dem Codierungsmittel entfernt liegt.

7. System nach Anspruch 5, wobei die Zeitdauer zwischen Halbperioden mit einer niedrigen Amplitude auf eine Anzahl diskreter Niveaus zwischen 1 und n + 1 einstellbar ist.

8. System nach Anspruch 7, wobei jedes diskrete Niveau einer gewählten Lichtleistung aus der genannten Leuchtstofflampe entspricht.

9. System nach Anspruch 8, wobei die Größe des genannten ersten Spannungssignals einen Betrieb der genannten Leuchtstofflampe bei der gewählten Lichtleistung ermöglicht.

10. System nach Anspruch 5, wobei das genannte Codierungsmittel einen Mikrocomputer (36) umfaßt.

11. System nach Anspruch 5, wobei das genannte Decodierungsmittel einen Mikrocomputer (120) umfaßt.

12. System wie nach einem der vorhergehenden Ansprüche dargelegt, wobei die genannten Codierungsmittel Mittel zum Unterbrechen der genannten periodischen Wechselspannung umfassen.

## Revendications

1. Système de commande du fonctionnement d'un dispositif (24) situé dans une structure comprenant:
- des bornes d'alimentation (10, 12) en vue du raccordement à une source d'alimentation CA,
- un moyen de codage (14) couplé auxdites bornes d'alimentation pour générer un signal CA cyclique,
- un moyen de décodage (120) pour décoder ledit signal CA cyclique et générer une tension CC dont l'amplitude détermine le fonctionnement du dispositif,
caractérisé en ce que ledit moyen de codage comprend des moyens (14) pour générer ledit signal CA cyclique à partir d'une tension CA périodique amenée par ladite source d'alimentation CA en réduisant l'amplitude de ladite tension CA périodique pendant au moins une demi-période à partir de chaque n demi-période successive de ladite tension CA périodique, n étant un nombre entier et n demi-périodes successives de ladite tension CA périodique formant un cycle dudit signal CA cyclique, ladite tension CA périodique étant une fréquence de ligne standard et la ligne normale d'alimentation de la construction pendant le fonctionnement du système formant des moyens pour transmettre ledit signal CA cyclique audit dispositif.

2. Système selon la revendication 1, dans lequel l'amplitude de ladite tension CC est réglée par la période de temps entre n demi-périodes présentant une amplitude réduite dans des cycles successifs dudit signal CA cyclique.

3. Système selon la revendication 2, dans lequel ledit moyen de codage comprend un micro-ordinateur (36).

4. Système selon la revendication 3, dans lequel ledit moyen de décodage comprend un micro-ordinateur (120).

5. Système selon la revendication 1 pour commander le fonctionnement d'une lampe à fluorescence (30) possédant un filament associé à celle-ci, dans lequel le système comprend par ailleurs un circuit de ballast de lampe équipé :
- d'un premier moyen de circuit (26) réagissant à ladite tension CC pour générer un premier signal CA possédant une amplitude proportionnelle à l'amplitude de ladite tension CC et comprenant des moyens pour coupler ledit premier signal CA à ladite lampe à fluorescence, et
- d'un deuxième moyen de circuit (26) réagissant à la tension CC pour générer un deuxième signal de tension CA présentant une amplitude proportionnelle à la fréquence résonnante dudit deuxième circuit, ledit deuxième circuit comprenant des moyens pour coupler (Y, B, R) ledit deuxième signal de tension CA auxdits filaments des moyens à filament de ladite lampe à fluorescence,
une réduction de l'amplitude dudit premier signal de tension CA d'un premier niveau vers un deuxième niveau, amenant ledit deuxième moyen de circuit à maintenir l'amplitude dudit deuxième signal de tension CA à une valeur au moins égale à la valeur lorsque ledit premier signal CA se trouvait audit premier niveau.

6. Système selon la revendication 5, dans lequel ledit moyen de décodage est éloigné dudit moyen de codage.

7. Système selon la revendication 5, dans lequel la période de temps entre demi-périodes présentant une faible amplitude est réglable en un nombre de niveaux entiers entre 1 et n + 1.

8. Système selon la revendication 7, dans lequel chaque niveau entier correspond à une intensité lumineuse choisie à partir de ladite lampe à fluorescence.

9. Système selon la revendication 8, dans lequel l'amplitude dudit premier signal de tension permet à ladite lampe à fluorescence de fonctionner à ladite intensité lumineuse choisie.

10. Système selon la revendication 5, dans lequel ledit moyen de codage comprend un micro-ordinateur (36).

11. Système selon la revendication 5, dans lequel ledit moyen de décodage comprend un micro-ordinateur (120).

12. Système selon l'une quelconque des revendications précédentes, dans lequel ledit moyen de codage comprend des moyens pour interrompre ladite tension CA périodique.
